# EUROPEAN PATENT SPECIFICATION

(11) **EP 1 595 853 B1**
(45) Date of publication and mention of the grant of the patent: **21.05.2008**
(21) Application number: 04025352.8
(22) Date of filing: 25.10.2004
(51) Int. Cl.: C03B 33/07, C03B 33/033

(54) **Apparatus for cutting laminated glass sheets, with means for parting the cut sheets**
Vorrichtung zum Schneiden verbundener Glasscheiben mit einem Mittel zum Trennen der geschnittenen Glasscheiben
Appareil pour couper des feuilles de verre avec un dispositif pour séparer les feuilles de verre marquées d'un trait de coupe

(30) Priority: 14.05.2004 IT MI20040974
(43) Date of publication of application: 16.11.2005
(73) Proprietor: GLASTON ITALY SPA, 22070 Bregnano (CO) (IT)
(72) Inventor: Bavelloni, Franco, 22020 San Fermo Della Battaglia (Como) (IT)
(74) Representative: Modiano, Micaela Nadia

(56) References cited:
- EP-A- 1 035 079
- WO-A-20/04007164
- DE-A1- 4 234 536
- DE-U1- 29 622 058
- US-A- 5 173 148
- PATENT ABSTRACTS OF JAPAN vol. 2002, no. 06, 4 June 2002 (2002-06-04) -& JP 2002 037638 A (DISPLAY TECHNOLOGIES INC), 6 February 2002 (2002-02-06)
- PATENT ABSTRACTS OF JAPAN vol. 2002, no. 05, 3 May 2002 (2002-05-03) -& JP 2002 018797 A (NISSHINBO IND INC), 22 January 2002 (2002-01-22)

## Description

The present invention relates to an apparatus for cutting laminated glass sheets, with means for parting the cut sheets.

As is known, laminated glass sheets are generally constituted by two glass sheets joined one another by means of a sheet of plastic material.

Cutting is performed by using cutting tables having two bridges, i.e., a lower bridge and an upper bridge, which support carriages provided with the scoring tool for tracing the cutting line and with a presser for running the cut of the upper sheet and the lower sheet.

Moreover, presser bars are typically provided to perform breakout and are arranged laterally to the cutting line, in practice clamping the sheet along the entire length of the cutting area, so as to perform a traction that parts and separates the plastic sheet which is typically provided by heating performed by means of a resistor and by means of a cutting blade.

With this type of solution, the presser bars that rest on the sheet may damage one of the surfaces of the sheets if such surface has a coating layer, such as for example a layer of the low-emissivity type.

In order to try to solve this problem, solutions have been provided in which the sheet is locked by means of two rows of suckers arranged laterally to the cutting line; this solution causes problems in parting the sheets after the central sheet has melted, since the glass is scored in an oil bath, which can grease the suckers which would slip on the glass, and it is therefore necessary to continuously clean the suckers.

Other known solutions apply traction to the sheets by means of two lines of grippers, which are spaced from the cutting line at the outer edges of the sheet being cut.

This solution suffers the drawback that, in order to support the rows of grippers, it is necessary to provide two bridges that move at right angles to the cut, with a significant increase in costs, further making it impossible to perform an angle cut.

All the solutions used so far to try to solve this problem have not been able, up to now, to eliminate the need to engage the surface of the sheet in the region laterally adjacent to the cutting line and therefore they do not allow to completely solve the problem.

The aim of the invention is to eliminate the drawbacks noted above by providing an apparatus for cutting laminated glass sheets with means for parting the cut sheets that allows to avoid damaging the outer surface of the sheets at the region adjacent to the cutting line.

Within this aim, an object of the invention is to provide an apparatus that allows to part the cut sheets without having to apply intense forces and with the possibility to perform cutting and parting of the cut sheet in very short times.

Another object of the present invention is to provide an apparatus that thanks to its particular constructive characteristics is capable of giving the greatest assurances of reliability and safety in use.

Another object of the present invention is to provide an apparatus for cutting laminated glass sheets with means for parting the cut sheets that can be easily obtained starting from commonly commercially available elements and materials.

DE 42 34 536 A1 discloses an apparatus for cutting a laminated sheet with the features of the preamble of claim 1.

This aim and these and other objects that will become better apparent hereinafter are achieved by an apparatus for cutting laminated glass sheets with means for parting the cut sheets, according to the invention, comprising a supporting framework that forms a worktable for supporting the laminated sheet, on which an upper carriage and a lower carriage for supporting the scoring means act, means for parting the cut sheets being further provided, characterized in that said means for parting the cut sheets comprise clamps, which can engage the edges of the laminated sheet at the end of the cutting line, each one of said clamps being provided with gripper elements that can be coupled to said laminated sheet on opposite sides of the respective end of said cutting line and proximate to the respective end of said cutting line, means for the mutual translational motion of the gripper elements of each clamp being further provided.

Further characteristics and advantages of the invention will become better apparent from the description of a preferred but not exclusive embodiment of an apparatus for cutting laminated glass sheets with means for parting the cut sheets, illustrated by way of non-limiting example in the accompanying drawings, wherein:

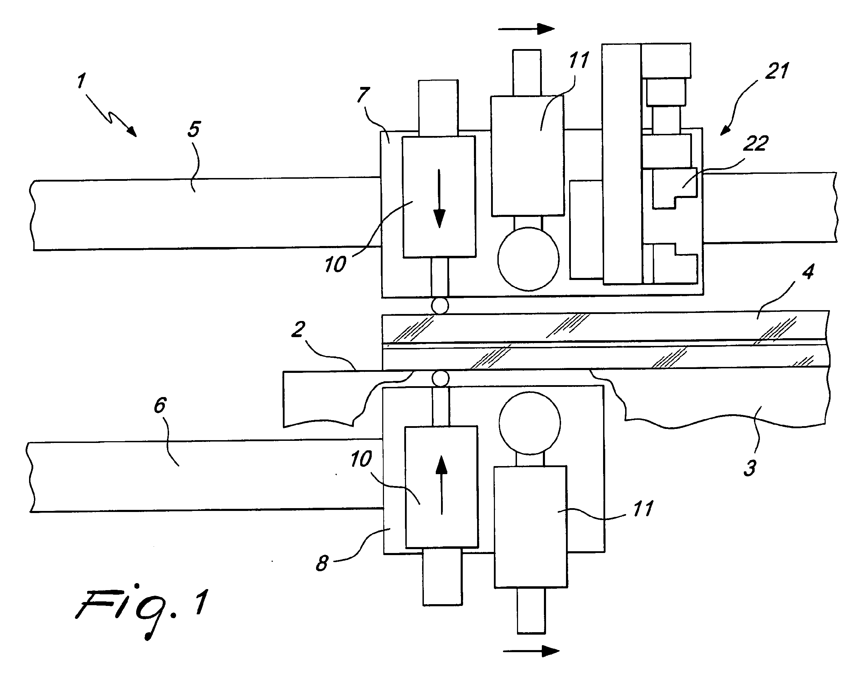

Figure 1 is a schematic view of the apparatus according to the invention during sheet scoring;

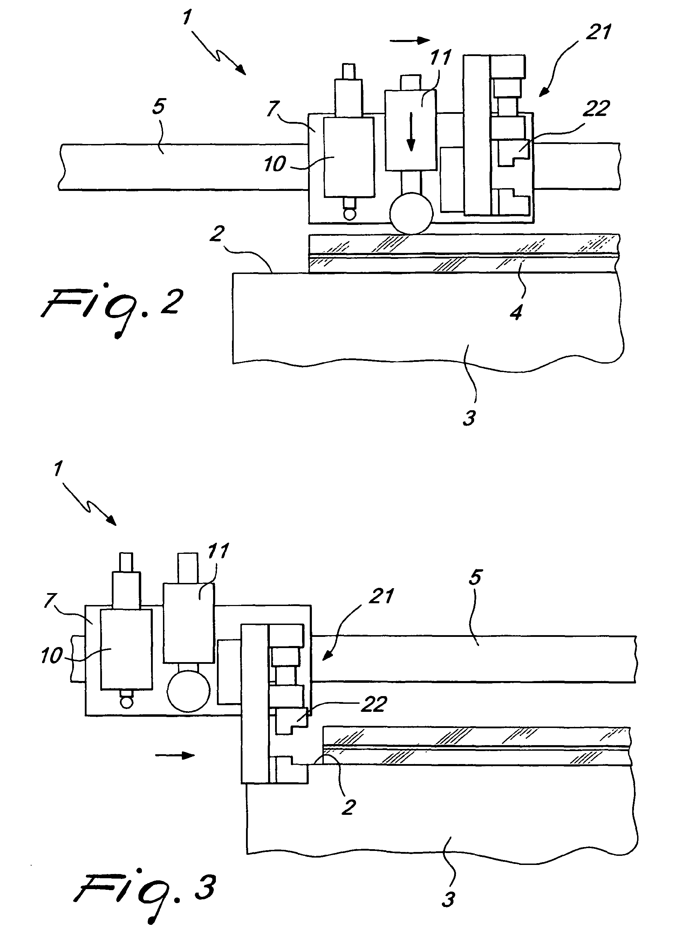

Figure 2 is a view of the apparatus during cut running;
Figure 3 is a schematic elevation view of the upper carriage arranged laterally adjacent to the laminated glass sheet;

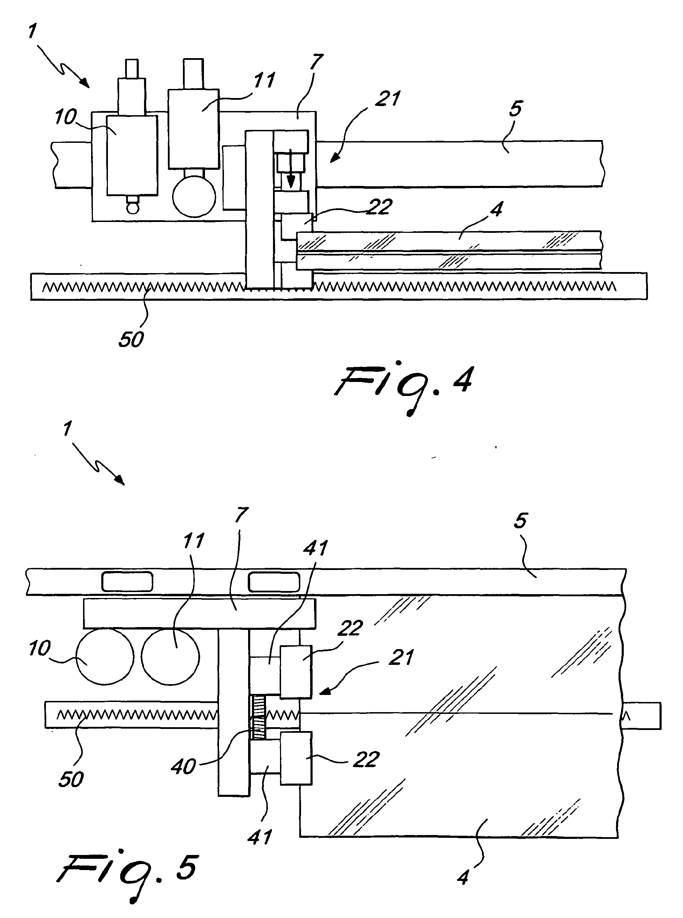

Figure 4 is a schematic elevation view of the step for the engagement of the clamps with the edge of the laminated sheet;
Figure 5 is a schematic plan view of the clamps coupled to the sheet;
Figure 6 is an elevation view of the apparatus, with the sheet retained between the clamps;
Figure 7 is a schematic plan view of the step for parting the cut sheet;

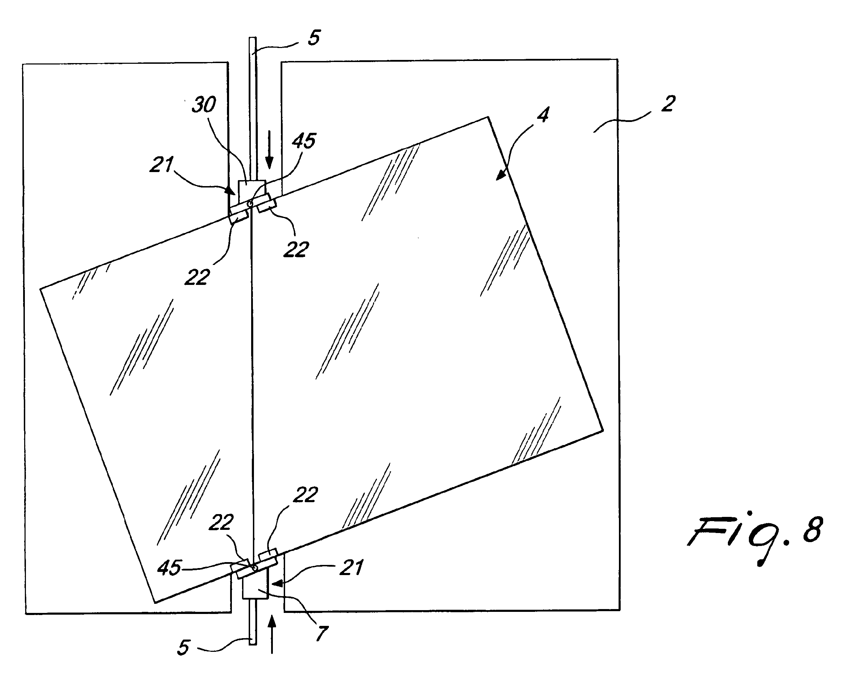

Figure 8 is a schematic view of the apparatus with the clamps applied to the sheet during the execution of an angle cut;
Figure 9 is a view of a different simplified embodiment.

With reference to the figures, the apparatus for cutting laminated glass sheets with means for parting the cut sheets, according to the invention, generally designated by the reference numeral 1, comprises a worktable 2, which is formed on a supporting framework generally designated by the reference numeral 3. The laminated glass sheet 4 to be cut is arranged on the worktable.

To perform the cut, an upper bridge 5 and a lower bridge 6 are provided, on which an upper carriage 7 and a lower carriage 8 can move respectively.

Each carriage has, in a per se known manner, scoring means 10 and cut running means 11, which perform in succession the scoring of the lower and upper sheets and the subsequent cut running of the lower and upper sheets.

Once cut running has been performed, it is necessary to part the cut sheets, and for this purpose there are means for parting the sheets which, in the specific case, are provided by means of clamps, designated by the reference numeral 21, which are connected to a carriage, for example the upper carriage, by vertical translational means, constituted for example by a cylinder that allows the clamp to perform a translational motion at right angles to the plane of arrangement, so as to disengage from the sheet during scoring and cut running.

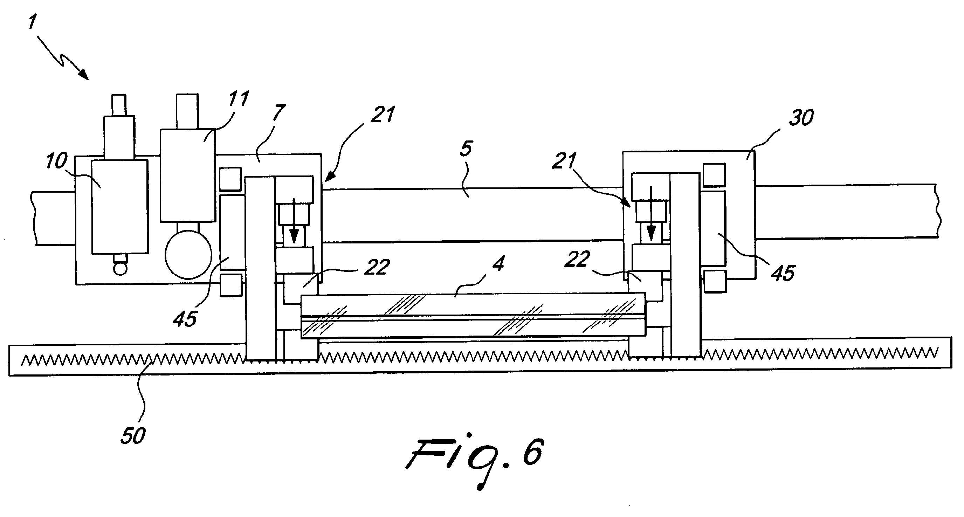

Moreover, on the upper bridge, as shown more clearly in Figure 6, there is an auxiliary carriage 30, which also supports a clamp 21. Each clamp is constituted by two gripper elements 22, which can engage the laminated sheet 4 at the ends of the cutting line provided on the sheet, so that for each clamp the corresponding gripper elements are arranged on the opposite side and proximate to the cutting line and can be fastened onto the sheet by per se known means.

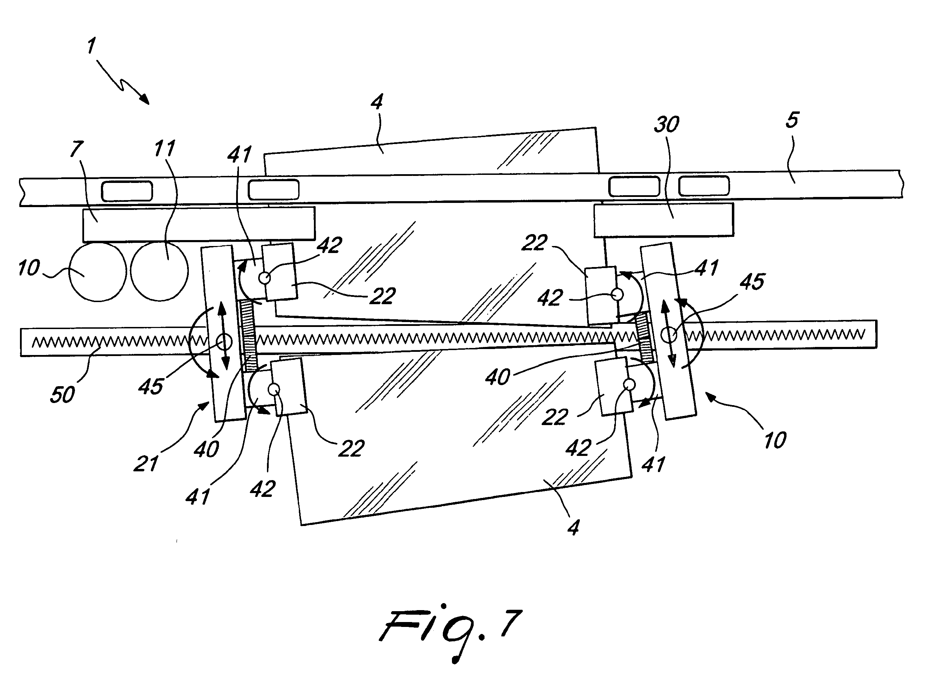

The gripper elements are connected to means for mutual translational motion, which, as shown schematically in Figure 7, may be provided by means of a bar 40 with oppositely orientated threads, which acts on the blocks 41 that support the gripper elements, so that the rotation of the bar 40 with oppositely orientated threads causes the mutual translational motion of the gripper elements, with consequent separation of the sheets subjected to cut running. The translational motion of the blocks 41 may also be provided by means of pistons or other equivalent means.

The translational motion of the gripper elements that engage the edges of the sheet at the end of the cutting lines achieves the parting of the cut sheet, being facilitated in doing so by the presence of the conventional resistor 50 for heating the sheet made of plastic material, and by an optional cutting blade, which is made to slide at the separation line of the sheets in order to facilitate parting.

Advantageously, the means for the mutual translational motion of the gripper elements provided on the opposite clamps are structured so as to provide different movements, so as to facilitate the mutual separation of the two sheets and make it gradual.

Advantageously, the gripper elements are connected to means for the oscillation of the clamp elements, which are constituted for example by auxiliary pivots 42 that allow a limited oscillation of the clamp elements in order to allow the mutual inclination that arises from the fact that the gripper elements on two opposite clamps are moved by different extents.

Moreover, in order to allow the provision of angle cuts on the sheet, the clamps 21 can be fitted by clamp oscillation means constituted for example by main pivots 45 that lie at right angles to the plane, as shown in Figure 7.

In practical use, after performing the steps for scoring and cut-running the sheets, during which the clamp 21 arranged on the carriage 7 is raised and therefore inactive, parting is performed, arranging the clamp at the level of the glass sheet and also arranging correspondingly the clamp provided on the opposite side; it is also possible to perform parting by using a single clamp arranged so as to straddle one end of the scoring line.

The sheet is then locked between the two opposite clamps by means of the gripper elements 22.

At the same time, the resistor 50 is activated and starts to heat the sheet at the scoring line; at the same time, traction is applied to the sheets, causing the mutual translational motion of the gripper elements, which pull the sheets, opening the cut where the blade that accelerates the parting of the sheets will pass.

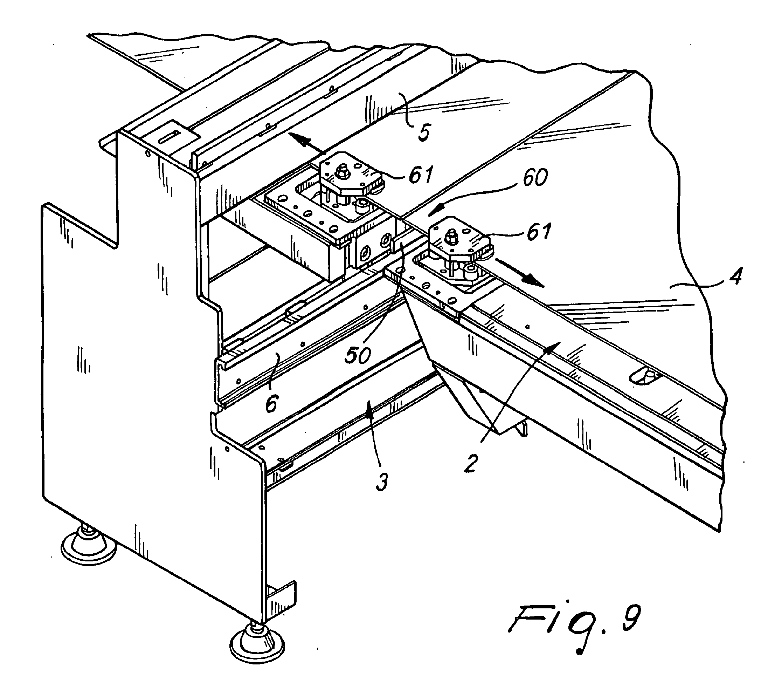

According to what is shown in Figure 9, it is possible to provide a simplified solution, in which there is a fixed clamp 60 that is arranged directly on the worktable 2. The clamp 60 is constituted by two gripper elements 61, which engage the sheet 4 on opposite sides with respect to the end of the scoring line.

To perform parting, it is possible to use only the clamp 60 connected to the fixed surface, by utilizing the mutual translational motion of the gripper elements 61.

It is also possible to provide a clamp that engages the opposite edge of the sheet, which is supported by the upper bridge, as in the preceding case.

As is evident, the sheet is not touched in its surface, except in the points of contact of the clamps, which are located at the ends of the cutting lines and are in any case located in a border region of the edge of the sheet, which is typically covered by trims when the sheet is used.

From what has been described above, it is thus evident that the invention achieves the intended aim and objects, and in particular the fact is stressed that an apparatus for cutting laminated glass sheets is provided which allows to part the cut sheets without damaging appreciably any sheet coating layers, such as for example the layer made of low-emissivity material.

## Claims

1. An apparatus (1) for cutting laminated glass sheets (4) with means for parting the cut sheets, comprising a supporting framework (3) that forms a worktable (2) for supporting the laminated sheet (4), on which an upper carriage(7) and a lower carriage (8) for supporting scoring means (10) act, means (21) for parting the cut sheets being further provided, **characterized in that** said means (21) for parting the cut sheets comprise at least one clamp (21), which can engage the edge of the laminated sheet (4) at one end of the cutting line, said at least one clamp being provided with gripper elements (22) that can be coupled to said laminated sheet (4) on opposite sides of the respective end of said cutting line and proximate to the respective end of said cutting line, means (40) for the mutual translational motion of the gripper elements (22) of said at least one clamp being further provided.

2. The apparatus according to claim 1, **characterized in that** it comprises one of said clamps (21) on one of said carriages(7,8), the other one of said clamps (21) being arranged on an auxiliary carriage (30) that is supported by the same bridge for the sliding of said carriage.

3. The apparatus according to claims 1 and 2, **characterized in that** said clamps (21) are supported by means (40) for vertical translational motion, for movement along a direction that is substantially perpendicular to the plane of arrangement of the sheet (4) being worked.

4. The apparatus according to one or more of the preceding claims, **characterized in that** said at least one clamp (21) comprises two gripper elements (22), which are connected to said means (40) for mutual translational motion.

5. The apparatus according to one or more of the preceding claims, **characterized in that** said at least one clamp(21) is supported by said worktable (2).

6. The apparatus according to the preceding claim, **characterized in that** the gripper elements (22) that form said at least one clamp (21) are arranged on opposite sides with respect to the bridges that support said upper carriage (7) and said lower carriage (8).

7. The apparatus according to one or more of the preceding claims, **characterized in that** the means (40) for the mutual translational motion of one of said clamps (21) perform a different movement with respect to the means (40) for the mutual translational motion of the other one of said clamps.

8. The apparatus according to one or more of the preceding claims, **characterized in that** said means for mutual translational motion comprise a bar (40) with oppositely orientated threads, which engages rotatably blocks (41) for supporting said gripper elements (22), means for the rotation of said bar (40) with oppositely orientated threads being further provided.

9. The apparatus according to one or more of the preceding claims, **characterized in that** said means for mutual translational motion comprise pistons that act between said blocks (41).

10. The apparatus according to one or more of the preceding claims, **characterized in that** it comprises means for the oscillation of said gripper elements (22), which are constituted by auxiliary pivots (42) that are adapted to allow an oscillation of said gripper elements (22) along an axis that is substantially perpendicular to the plane of arrangement of said sheet (4).

11. The apparatus according to one or more of the preceding claims, **characterized in that** it comprises means (45) for the oscillation of said clamps (21) about an axis that is substantially perpendicular to the plane of arrangement of said sheet (4).

## Patentansprüche

1. Eine Vorrichtung (1) zum Schneiden von Verbundglasscheiben (4) mit Mitteln zum Trennen der geschnittenen Scheiben, die einen Stützrahmen (3) umfasst, der einen Werktisch (2) bildet, um die Verbundscheibe (4) zu tragen, auf die ein oberer Schlitten (7) und ein unterer Schlitten (8) zum Tragen von Kerbungsmitteln (10) einwirken, wobei weiter Mittel (21) zum Trennen der geschnittenen Scheiben bereitgestellt werden, **dadurch gekennzeichnet; dass** die Mittel (21) zum Trennen der geschnittenen Scheiben mindestens eine Klemme (21) umfassen, welche die Kante der Verbundscheibe (4) an einem Ende der Schneidlinie festklemmen kann, wobei die mindestens eine Klemme mit Greiferelementen (22) versehen ist, welche mit der Verbundscheibe (4) auf gegenüberliegenden Seiten des entsprechenden Endes der Schneidlinie und nahe dem entsprechenden Ende der Schneidlinie gekoppelt werden können, wobei weiter Mittel (40) für die gegenseitige translatorische Bewegung der Greiferelemente (22) der mindestens einen Klemme bereitgestellt werden.

2. Die Vorrichtung gemäß Anspruch 1, **dadurch gekennzeichnet, dass** sie eine der Klemmen (21) an einem der Schlitten (7, 8) umfasst, wobei die andere der Klemmen (21) an einem Zusatzschlitten (30) angebracht ist, der von derselben Brücke zum Gleiten des Schlittens getragen wird.

3. Die Vorrichtung gemäß Anspruch 1 und 2, **dadurch gekennzeichnet, dass** die Klemmen (21) von Mitteln (40) zur vertikalen translatorische Bewegung getragen werden, zur Bewegung entlang einer Richtung, die im Wesentlichen rechtwinklig zur Ebene der Anordnung der bearbeiteten Scheibe (4) ist.

4. Die Vorrichtung gemäß einem oder mehreren der obigen Ansprüche, **dadurch gekennzeichnet, dass** die mindestens eine Klemme (21) zwei Greiferelemente (22) umfasst, die mit den Mitteln (40) zur gegenseitigen translatorische Bewegung verbunden sind.

5. Die Vorrichtung gemäß einem oder mehreren der obigen Ansprüche, **dadurch gekennzeichnet, dass** die mindestens eine Klemme (21) vom Werktisch (2) getragen wird.

6. Die Vorrichtung gemäß dem obigen Anspruch, **dadurch gekennzeichnet, dass** die Greiferelemente (22), welche die mindestens eine Klemme (21) bilden, auf gegenüberliegenden Seiten im Verhältnis zu den Brücken angeordnet sind, welche den oberen Schlitten (7) und den unteren Schlitten (8) tragen.

7. Die Vorrichtung gemäß einem oder mehreren der obigen Ansprüche, **dadurch gekennzeichnet, dass** die Mittel (40) zur gegenseitigen translatorischen Bewegung einer der Klemmen (21) eine andere Bewegung durchführen als die Mittel (40) zur gegenseitigen translatorischen Bewegung der anderen Klemme.

8. Die Vorrichtung gemäß einem oder mehreren der obigen Ansprüche, **dadurch gekennzeichnet, dass** die Mittel zur gegenseitigen translatorischen Bewegung einen Stab (40) mit entgegengesetzt ausgerichteten Gewinden umfassen, welche drehbar in Blöcke (41) zum Tragen der Greiferelemente (22) eingreifen, wobei weiter Mittel zum Drehen des Stabs (40) mit entgegengesetzt ausgerichteten Gewinden bereitgestellt werden.

9. Die Vorrichtung gemäß einem oder mehreren der obigen Ansprüche, **dadurch gekennzeichnet, dass** die Mittel zur gegenseitigen translatorischen Bewegung Kolben umfassen, die zwischen den Blöcken (41) arbeiten.

10. Die Vorrichtung gemäß einem oder mehreren der obigen Ansprüche, **dadurch gekennzeichnet, dass** sie Mittel zur Oszillation der Greiferelemente (22) umfasst, die aus Hilfs-Drehzapfen (42) bestehen, welche ausgebildet sind, um eine Oszillation der Greiferelemente (22) entlang einer Achse zu ermöglichen, die im Wesentlichen rechtwinklig zur Ebene der Anordnung der Scheibe (4) ist.

11. Die Vorrichtung gemäß einem oder mehreren der obigen Ansprüche, **dadurch gekennzeichnet, dass** sie Mittel (45) zur Oszillation der Klemmen (21) um eine Achse umfasst, die im Wesentlichen rechtwinklig zur Ebene der Anordnung der Scheibe (4) ist.

## Revendications

1. Appareil (1) pour couper des feuilles de verre laminées (4) avec des moyens pour séparer les feuilles coupées, comprenant un châssis de support (3) qui forme un plan de travail (2) pour supporter les feuilles laminées (4), sur lequel agissent un chariot supérieur (7) et un chariot inférieur (8) pour le support de moyens d'entaillage (10), des moyens (21) pour séparer les feuilles coupées étant en outre prévus, **caractérisé en ce que** lesdits moyens (21) pour la séparation des feuilles coupées comprennent au moins une pince (21), qui peut venir en prise avec le bord de la feuille laminée (4) au niveau d'une extrémité de la ligne de coupe, ladite au moins une pince étant munie d'éléments de préhension (22) qui peuvent être couplés à ladite feuille laminée (4) sur des côtés opposés de l'extrémité respective de ladite ligne de coupe et à proximité de l'extrémité respective de ladite ligne de coupe, des moyens (40) pour le déplacement translationnel mutuel des éléments de préhension (22) de ladite au moins une pince étant en outre prévus.

2. Appareil selon la revendication 1, **caractérisé en ce qu'**il comprend une desdites pinces (21) sur l'un desdits chariots (7, 8), l'autre desdites pinces (21) étant agencée sur un chariot auxiliaire (30) qui est supporté par le même pont pour le coulissement dudit chariot.

3. Appareil selon les revendications 1 et 2, **caractérisé en ce que** lesdites pinces (21) sont supportées par des moyens (40) pour le déplacement translationnel vertical, pour un déplacement le long d'une direction qui est sensiblement perpendiculaire au plan d'agencement de la feuille (4) à travailler.

4. Appareil selon une ou plusieurs des revendications précédentes, **caractérisé en ce que** ladite au moins une pince (21) comprend deux éléments de préhension (22) qui sont reliés auxdits moyens (40) pour le déplacement translationnel mutuel.

5. Appareil selon une ou plusieurs des revendications précédentes, **caractérisé en ce que** ladite au moins une pince (21) est supportée par ledit plan de travail (2).

6. Appareil selon la revendication précédente, **caractérisé en ce que** lesdits moyens de préhension (22) qui forment ladite au moins une pince (21) sont agencés sur des côtés opposés par rapport au ponts qui supportent ledit chariot supérieur (7) et ledit chariot inférieur (8).

7. Appareil selon une ou plusieurs des revendications précédentes, **caractérisé en ce que** les moyens (40) pour le déplacement translationnel mutuel de l'une desdites pinces (21) réalise un déplacement différent par rapport au moyens (40) pour le déplacement translationnel mutuel de l'autre desdites pinces.

8. Appareil selon une ou plusieurs des revendications précédentes, **caractérisé en ce que** lesdits moyens pour le déplacement translationnel mutuel comprennent une barre (40) avec des filetages orientés de façon opposée, qui vient en prise de façon rotative avec des blocs (41) pour supporter lesdits éléments de préhension (22), des moyens pour la rotation de ladite barre (40) avec des filetages orientés de façon opposée étant en outre prévus.

9. Appareil selon une ou plusieurs des revendications précédentes, **caractérisé en ce que** lesdits moyens pour le déplacement translationnel mutuel comprennent des pistons qui agissent entre lesdits blocs (41).

10. Appareil selon une ou plusieurs des revendications précédentes, **caractérisé en ce qu'**il comprend des moyens pour l'oscillation desdits éléments de préhension (22), qui sont constitués par des pivots auxiliaires (42) qui sont adaptés pour permettre une oscillation desdits éléments de préhension (22) le long d'un axe qui est sensiblement perpendiculaire au plan d'agencement de ladite feuille (4).

11. Appareil selon une ou plusieurs des revendications précédentes, **caractérisé en ce qu'**il comprend des moyens (45) pour l'oscillation desdites pinces (21) autour d'un axe qui est sensiblement perpendiculaire au plan d'agencement de ladite feuille (4).
